# EUROPEAN PATENT APPLICATION

(11) **EP 2 479 420 A2**
(43) Date of publication of application: **25.07.2012**
(21) Application number: 12152142.1
(22) Date of filing: 23.01.2012
(51) Int. Cl.: F02P 15/10, F02P 3/04

(54) **Internal combustion engine ignition system**

(30) Priority: 24.01.2011 JP 2011011615
(71) Applicant: Diamond Electric MFG. Co., Ltd., Osaka-shi, Osaka (JP)
(72) Inventor: Shimakawa, Hideaki, Osaka (JP); Fukumura, Yoshiyuki, Osaka (JP)
(74) Representative: Ilgart, Jean-Christophe

(57) **Abstract**

According to one embodiment, there is provided an internal combustion engine ignition system, including: a spark coil having primary and secondary coils, the spark coil being configured to apply a high voltage to a spark plug from the secondary coil; a power transistor configured to perform an intermittent control on a current flowing through the primary current for a given time period, based on an inputted multipulse; a DC-DC converter electrically connected to the primary coil and configured to control a bias voltage applied to the primary coil; and a converter control circuit configured to control the DC-DC converter while switching a control mode to either a feedback mode in which the bias voltage is increased or decreased based on a detection value of the bias voltage, or a forced voltage increase mode in which the bias voltage is forcedly increased.

## Description

### FIELD

Embodiments described herein relate generally to an internal combustion engine ignition system, and in particular relates to an internal combustion engine ignition system in which a spark coil is driven by a multipulse.

### BACKGROUND

In recent years, in order to improve fuel efficiency for an internal combustion engine in an automobile, studies have been pursued on techniques related to lean fuel combustion control (lean bum engine) or EGR for flowing a combustion gas back to an engine cylinder. For these techniques, in order to effectively combust a fossil fuel contained in a fuel air mixture, an ignition system using a multi-ignition method/AC ignition method or a DCO method is studied. In the multi-ignition method or the AC ignition method, continuous discharge more than once is performed at a spark plug at ignition timing of the internal combustion engine. In the DCO method, continuous discharge is performed at a spark plug for a given time period around ignition timing. In the ignition system using any of the above methods, a voltage is applied to a primary coil (primary side) of a spark coil by a DC-DC converter or the like, and such voltage is set at a high value, in order to obtain a high discharge voltage.

For example, JP Patent Application No. 2010-164927 (and US Patent Application No. 13/149,433) proposes an internal combustion engine ignition system using a DCO ignition method. An ignition device used in this system includes two spark coils accommodated inside a case. Output sides of the respective spark coils are connected into a common output terminal, and an increased voltage is outputted therefrom. And, power transistors are provided correspondingly with the respective spark coils to perform energization control such that primary coils of the spark coils are reciprocally energize, thereby continuously generating an increased voltage and performing a continuous discharge operation at a spark plug for a discharge request period (period for performing the continuous discharge operation).

A DC-DC converter is connected to the ignition device. The DC-DC converter generates a bias voltage Vout by boosting a voltage (12 V to 24 V) supplied from a car-mounted battery, and outputs the generated bias voltage Vout to the primary coils of the spark coils through a smoothing capacitor. In the continuous discharge operation, operation cycle of supplying the primary current and instantaneously interrupting it is repeated in plurality during the discharge request period. Preferably, the ignition system maintains the bias voltage to be applied to each primary coil sufficiently high so that the primary current has a sufficiently-steep rising angle for reaching/exceeding a threshold value, in order to obtain a sufficient induction voltage in each operation cycle and to sustain the discharge at the spark plug during the discharge request period (to surely perform the continuous discharge operation).

Typically, the bias voltage Vout outputted from the DC-DC converter is adjusted into a desired set voltage through a feedback control. For example, a lower limit threshold voltage is specified, and when a detected value of the bias voltage Vout falls below the threshold voltage, voltage increase control is performed in accordance with a difference between the detected value and the set voltage, thereby converging the bias voltage Vout on the set voltage. Again, the DC-DC converter adapting the feedback control starts voltage increase control after the bias voltage Vout has fallen below the lower limit threshold voltage.

Accordingly, in JP Patent Application No. 2010-164927, at an early stage of the continuous discharge operation, the bias voltage Vout of the DC-DC converter reduces until it falls below the threshold voltage. Thus, at the early stage of the continuous discharge operation, the bias voltage Vout may remain at a relatively low value, and the rising angle of the primary current in each operation cycle may become gentle so as not to reach the threshold value, that is, the sufficient induction voltage may not be obtained in each spark coil. As a result, the discharge operation could not be sustained during the discharge request period.

The reduction of the bias voltage Vout may occur not only in the DCO-method ignition system but also in other types of ignition systems. For example, JP-2009-215902-A proposes an ignition system using a multi-ignition method in which a spark signal having a relatively long time period is supplied, and an induction operation of a spark coil is continuously performed during the discharge request period. As a result, a discharge operation is continuously performed at the spark plug for the discharge request period, due to the above-mentioned operation of the spark coil.

Also in the ignition system using the multi-discharge method, a primary current flowing through the spark coil is generated more than once in the discharge operation, and a DC-DC converter is provided at the primary side of the spark coil to increase the rising angel of the primary current. Thus, as similar to the DCO method, at the early stage of the continuous discharge operation, the bias voltage Vout generated by the DC-DC converter reduces until voltage increase control in the feedback control is started. As a result, the primary current of the spark coil may not reach a desired value, and discharge could not be sustained at the spark plug during the discharge request period.

JP-H09-042127-A proposes an ignition system using an AC ignition method. In this method, a period for continuously performing a discharge operation is provided so that discharge operation is continuously performed while changing the polarity of the discharge. Also in the ignition system, a discharge operation is repeated during a given time period (discharge request period), and a DC-DC converter controls the bias voltage Vout through the feedback control. As a result, when the bias voltage Vout falls simultaneously with the start of a spark operation, recovery of a voltage value of the bias voltage Vout may be delayed, and discharge could not be sustained at the spark plug during the discharge request period.

### SUMMARY

One object of the present invention is to provide an internal combustion engine ignition system that suppresses an output reduction of a DC-DC converter so that discharge of a spark plug is reliably sustained.

According to one embodiment, there is provided an internal combustion engine ignition system, including: a spark coil having primary and secondary coils, the spark coil being configured to apply a high voltage to a spark plug from the secondary coil; a power transistor configured to perform an intermittent control on a current flowing through the primary current for a given time period, based on an inputted multipulse; a DC-DC converter electrically connected to the primary coil and configured to control a bias voltage applied to the primary coil; and a converter control circuit configured to control the DC-DC converter while switching a control mode to either a feedback mode in which the bias voltage is increased or decreased based on a detection value of the bias voltage, or a forced voltage increase mode in which the bias voltage is forcedly increased.

According to the above configuration, in the forced voltage increase mode, the DC-DC converter forcedly increases the bias voltage with appropriate timing. Since the converter control circuit allows the forced voltage increase mode to function in the discharge request period, an output voltage reduction during the discharge request period can be suppressed. Hence, in the internal combustion engine ignition system, every primary current generated during the discharge request period reaches a necessary value, and the discharge operation at the spark plug can be continuously and reliably performed.

Furthermore, by moving forward a start time of the forced voltage increase mode, a bias voltage restoration operation can be accelerated. Especially, by allowing the forced voltage increase mode to function from an early stage of the discharge request period, the bias voltage restoration operation can be quickly performed.

### BRIEF DESCRIPTION OF DRAWINGS

FIG. 1 illustrates a structure of an internal combustion engine ignition device according to embodiments.
FIG. 2 is a cross-sectional view taken along the line B-B in FIG. 1.
FIG. 3 illustrates an example circuit configuration of an internal combustion engine ignition system according to the embodiments.
FIG. 4 illustrates another example of internal combustion engine ignition system.
FIG. 5 illustrates still another example of the internal combustion engine ignition system.
FIG. 6 illustrates spark command signals, primary currents, and a secondary current (discharge current).
FIG. 7 illustrates a circuit configuration of a DC-DC converter according to Embodiment 1.
FIG. 8 illustrates a circuit configuration of a DC-DC converter according to Embodiment 2.
FIG. 9 illustrates a control mode switching program according to Embodiment 3.
FIG. 10 illustrates operations of the DC-DC converter according to Embodiment 3.
FIG. 11 illustrates a control mode switching program according to Embodiment 4.
FIG. 12 illustrates operations of the DC-DC converter according to Embodiment 4.
FIG. 13 illustrates a circuit configuration of a DC-DC converter according to Embodiment 5.
FIG. 14 illustrates spark command detection signals and mode switching signals according to Embodiment 5.
FIG. 15 is a graph illustrating actual measured values obtained by operations of the DC-DC converter according to Embodiment 5.
FIG. 16 is a graph illustrating actual measured values obtained by operations of a DC-DC converter according to a comparison example.
FIG. 17 illustrates a modified example of spark command detection signals and mode switching signals according to Embodiment 5.
FIG. 18 illustrates another modified example of spark command detection signals and mode switching signals according to of Embodiment 5.

### EMBODIMENTS

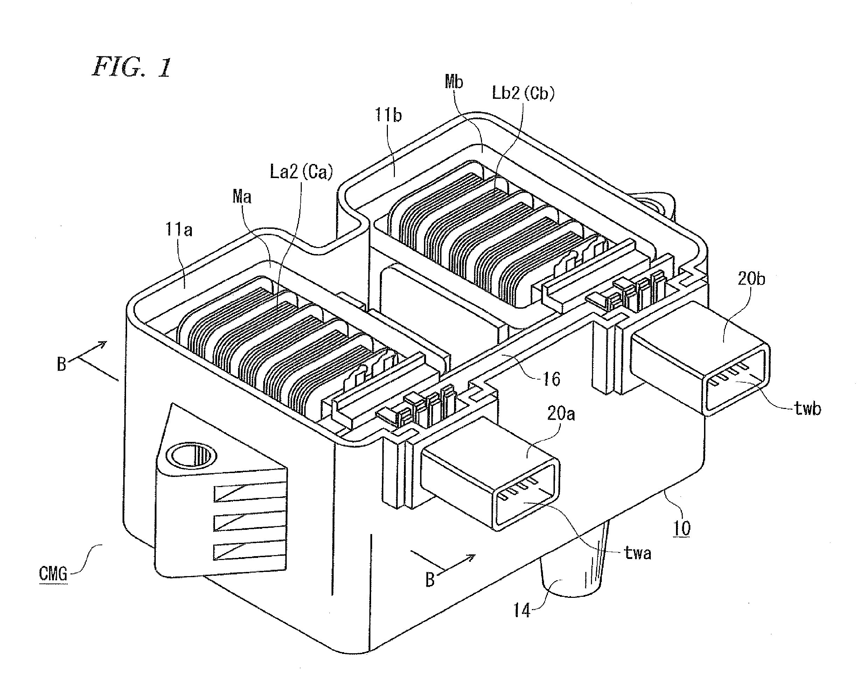

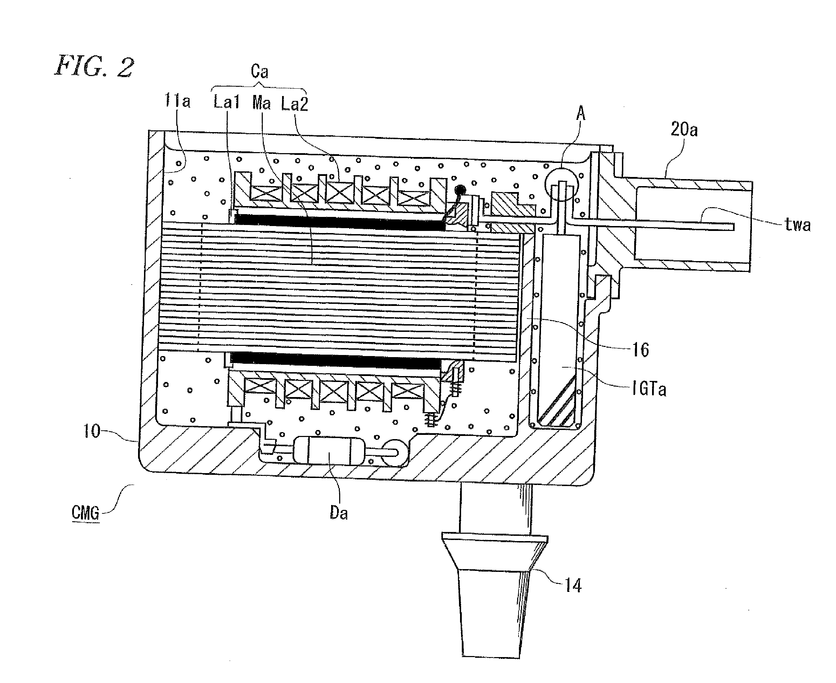

Hereinafter, embodiments will be described with reference to the drawings. As illustrated in FIGS. 1 and 2, an internal combustion engine ignition device (ignition device) CMG includes: spark coils Ca and Cb; igniters IGTa and IGT as a primary current generator; and a case body 10.

### (Basic Components)

The spark coil Ca includes a primary coil La1, a secondary coil La2 and an iron core Ma. Similarly, the spark coil Cb includes a primary coil Lb1, a secondary coil Lb2 and an iron core Mb. Both of the spark coils Ca and Cb are accommodated in the single case body 10. The number of the spark coils is not limited to two, and plural spark coils may be provided.

The igniters IGTa and IGTb are respectively provided for the spark coils Ca and Cb. When the plural spark coils are provided, plural igniters are respectively provided.

The case body 10 is formed from a material such as a thermoplastic resin so that the spark coils are insulated. In the case body 10, a first coil containing part 11 a, a second coil containing part 11 b and a partition wall 16 are formed. The spark coils Ca and Cb are respectively contained in the containing parts 11a and 11b. The igniters IGTa and IGTb are contained in a narrow space defined by the partition wall 16. Connectors 20a and 20b are attached to the case body 10, and terminals twa and twb provided in the connectors 20a and 20b are connected to terminal of the igniters IGTa and IGTb and terminals of the spark coils Ca and Cb, as illustrated in a region A in Fig. 2. When the plural spark coils and the plural igniters are provided, plural connectors and terminals are respectively provided.

A gap in the ignition device CMG is filled with a thermosetting resin as illustrated in FIG. 2, thereby maintaining the insulation in the coil gap. The ignition device CMG further includes a high voltage part 14 having a high voltage terminal. Upon input of spark signals to the connector terminals twa and twb, a bias voltage Vout of a DC-DC converter is increased, and the increased voltage is applied to a spark plug.

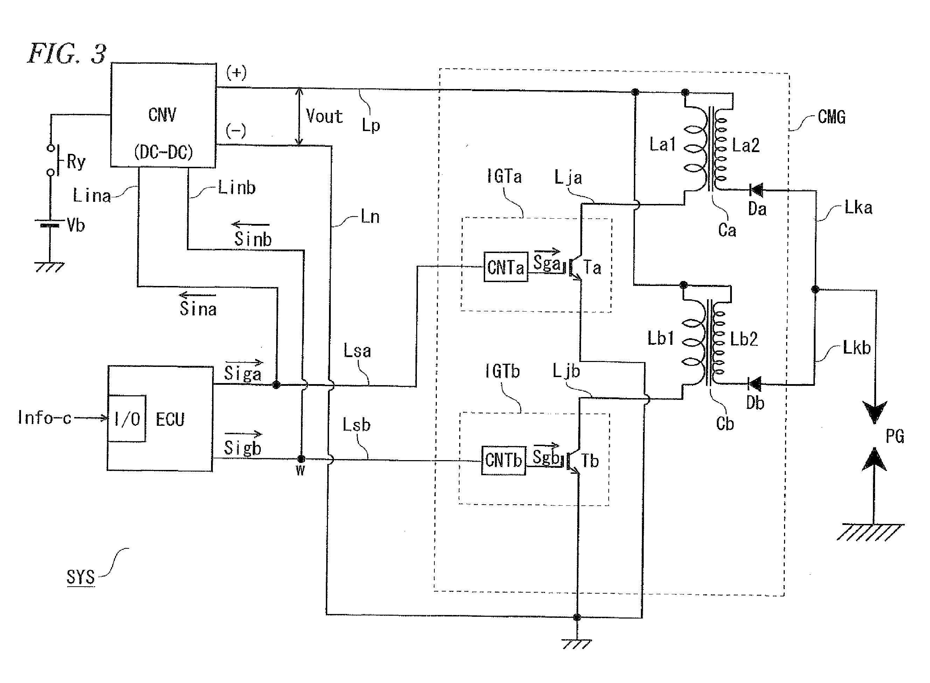

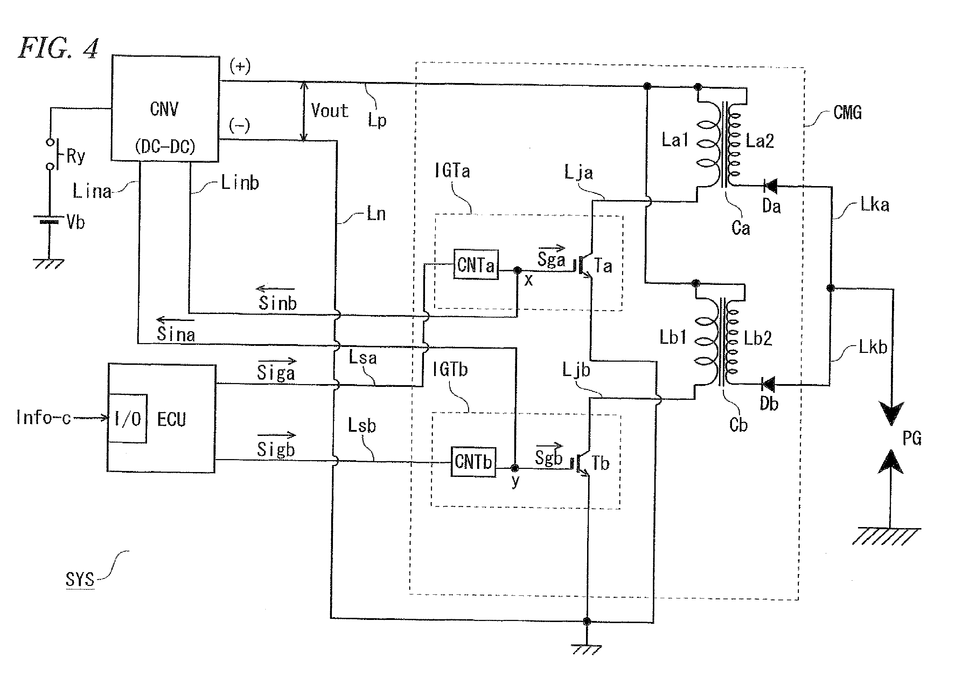

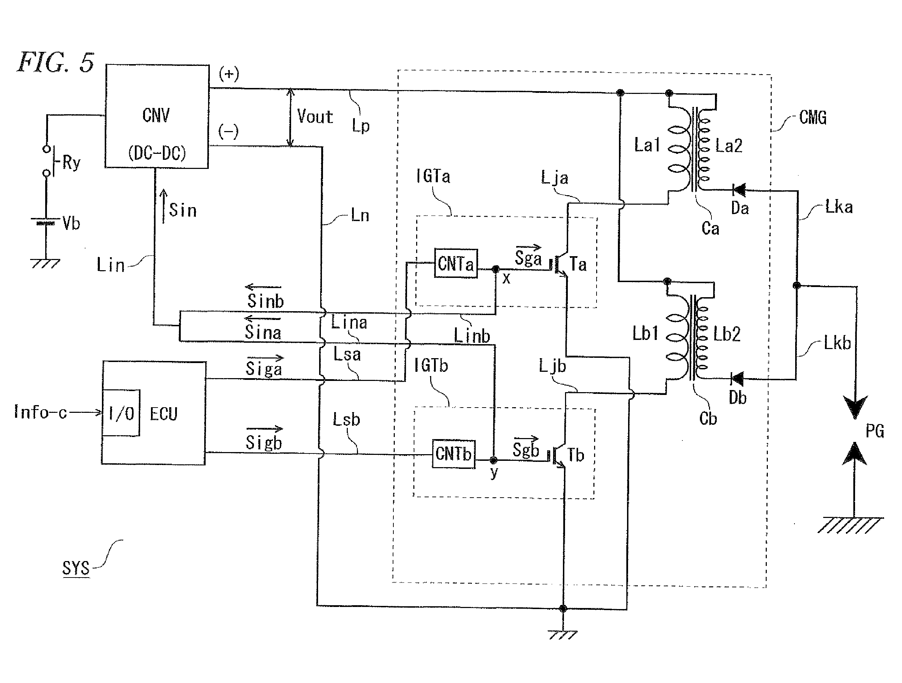

FIG. 3 illustrates an example configuration of an internal combustion engine ignition system (ignition system) SYS according to the embodiments. FIGS. 4 and 5 illustrate another examples of the ignition system SYS. The ignition system SYS includes: the above-described ignition device CMG; and a DC-DC converter CNV

The ignition device CMG includes a power line Lp through which electric power is received from the DC-DC converter CNV. The power line Lp is connected to input ends of both of primary coils La1 and Lb1 of the spark coils Ca and Cb. The other ends of the primary coils La1 and Lb1 are respectively connected with power lines Lja and Ljb, and are connected to a ground voltage respectively via power transistors Ta and Tb. Output ends of the secondary coils La2 and Lb2 are respectively connected to cathodes of diodes Da and Db such that the diodes Da and Db are in a backward direction, and to thereby prevent pre-ignition. Anodes of the diodes Da and Db are connected together through power lines Lka and Lkb, and the connected portion of the power lines Lka and Lkb is connected to an input terminal of a spark plug PG. Thus, the secondary coils La2 and Lb2 are connected to the single common spark plug PG so that a negative high voltage is applied to the spark plug PG from both of the spark coils Ca and Cb.

The igniter IGTa includes a control part CNTa and the power transistor Ta. The control part CNTa is connected with an engine control unit ECU through a signal line Lsa, and is fed a spark signal Siga. This spark signal Siga may be a long time period pulse in which a rising time indicates a discharge request period, or may be a multipulse in which plural pulses continuously appear during the discharge request period. In the former case, the spark signal Siga is converted into a multipulse by the control part CNTa. The signal for driving the power transistor will be collectively referred to as "spark command signals" irrespective of, for example, whether it is outputted from the engine control unit or inputted to the power transistor and whether it is a multipulse signal or a relatively long rectangular signal.

In any case, a multipulse Sga is inputted to the power transistor Ta, and the ON/OFF control of the power transistor Ta is performed more than once within the discharge request period. Thus, a primary current flowing through the primary coil La1 is generated intermittently in synchronization with the multipulse.

For example, the igniter IGTb includes a control part CNTb and the power transistor Tb, and the control part CNTb is connected with the engine control unit ECU through a signal line Lsb to receive a spark signal Sigb, similarly to the igniter IGTa. The power transistor Tb also intermittently generates a primary current in synchronization with a multipulse Sgb. As the power transistor, for example, an IGBT or a MOSFET may be used.

Phases of the multipulses Sga and Sgb are shifted from each other so as not to coincide, thereby alternately driving the power transistors Ta and Tb. In other words, the primary currents passing through both of the power transistors Ta and Tb appear alternately with respect to each other.

The engine control unit ECU includes a central processing unit, an I/O circuit, a memory circuit, a clock circuit, etc., and generates the first and second spark signals Siga and Sigb based on inputted information to thereby appropriately control an internal combustion engine. The I/O circuit is fed information (operating state information) Info-c indicating an operating state of the internal combustion engine from various electronic control units or sensors provided at respective parts of an automobile. The operating state information Info-c includes operation information of an injector, information provided from a crank angle sensor, etc. The engine control unit ECU recognizes information indicating the load state of the internal combustion engine and the rotation speed thereof, and sets the respective spark signals Siga and Sigb, based on these information.

As illustrated in FIG. 3, a voltage Vin of about 12 (V) to about 24 (V) is applied to the DC-DC converter CNV from a car-mounted battery Vb, and the DC-DC converter CNV generates the bias voltage Vout of about 40 (V) to about 50 (V) from the applied voltage Vin. In an automobile power system according to the embodiments, a relay Ry is provided between the car-mounted battery Vb and the DC-DC converter CNV. After the check by a control unit in the automobile is performed, the relay Ry is driven to supply the voltage of the car-mounted battery Vb to the DC-DC converter CNV. The power line Lp is connected to an anode terminal (+) of the DC-DC converter CNV, and a power line Ln is connected to a cathode terminal (-) of the DC-DC converter CNV. The power line Lp is connected to both of the input sides of the primary coils La1 and Lb1. In other words, the DC-DC converter CNV outputs the bias voltage Vout to the spark coils Ca and Cb via the common power line.

The DC-DC converter CNV is connected with signal lines Lina and Linb. In the example of FIG. 3, the signal lines Lina and Linb are connected to signal detection points v and w subsequent to the engine control unit ECU, respectively. And, the spark signals Siga and Sigb outputted from the engine control unit ECU are inputted to the DC-DC converter CNV as the spark command signals Sina and Sinb. In the example of FIG. 4, the signal lines Lina and Linb connected with the DC-DC converter CNV are connected to signal detection points x and y preceding the power transistors Ta and Tb, respectively. And, the multipulses Sga and Sgb to be inputted to the power transistors Ta and Tb are inputted to the DC-DC converter CNV as the spark command signals Sina and Sinb. In the example of FIG. 5, the respective signal lines Lina and Linb connected to the signal detection points x and y are combined into a signal line Lin, and a spark command signal Sin is inputted to the DC-DC converter CNV. Although not shown in Fig. 5, diodes or the like will be provided in the signal lines Lina and Linb so as to prevent the multipulse Sga (Sgb) from being supplied to the power transistor Tb (Ta).

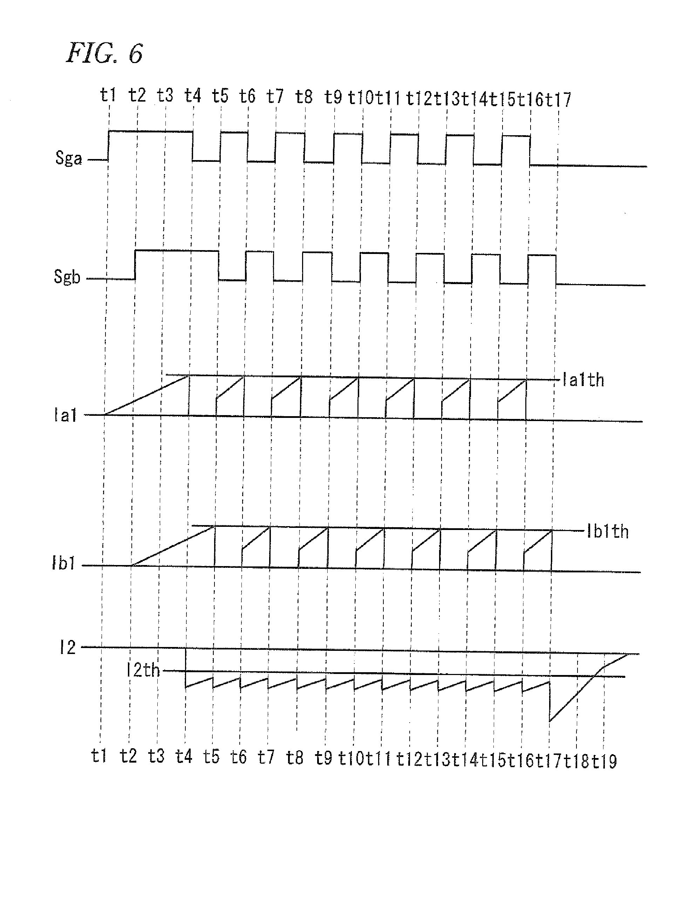

In the above-mentioned ignition system SYS, the multipulses Sga and Sgb are generated as illustrated in FIG. 6. In the multipulses, a first pulse has a long time period, and subsequent plural pulses have short time periods.

In the multipulses Sga and Sgb, by setting the first pulse to have the longer time period as compared with the subsequent pulses as described above, primary currents la1 and Ib1 can respectively reach specified current values Ia1th and Ib1th, While FIG. 6 illustrates AD timings t1 to t19, these AD timings {t1, t2, ... t18, and t19} are merely representative values, and unillustrated AD timings may also exist between the adjacent AD timings (e.g., between t1 and t2).

Upon driving of the power transistors Ta and Tb by the multipulses Sga and Sgb, the primary currents Ia1 and Ib1 are intermittently generated in the respective primary coils (intermittent control). The primary currents Ia1 and Ib1 (the rising angles thereof) are appropriately adjusted by the DC-DC converter CNV so that the primary currents Ia1 and Ib1 reach the specified current values Ia1th and Ib1th, respectively.

By causing magnetic flux in the respective secondary coils to continuously vary in synchronization with the primary currents, high voltages of several hundreds of volts (V) can be continuously obtained from the respective secondary coils. A voltage obtained by synthesizing the both high voltages is applied to the input terminal of the spark plug PG, and a discharge current I2 flows in a sustained manner. Here, a threshold value 12th is defined such that, when the discharge current I2 falls below the threshold value 12th, the discharge current I2 is likely to be interrupted. In order to avoid the interruption of the discharge current I2, the specified current values Ia1th and Ib1th are set so as to prevent the discharge current I2 from falling below the threshold value I2th. Hereinafter, a period during which the primary current is generated will be referred to as a "discharge request period", and the discharge current I2 is sustained correspondingly with the discharge request period.

### (Embodiment 1)

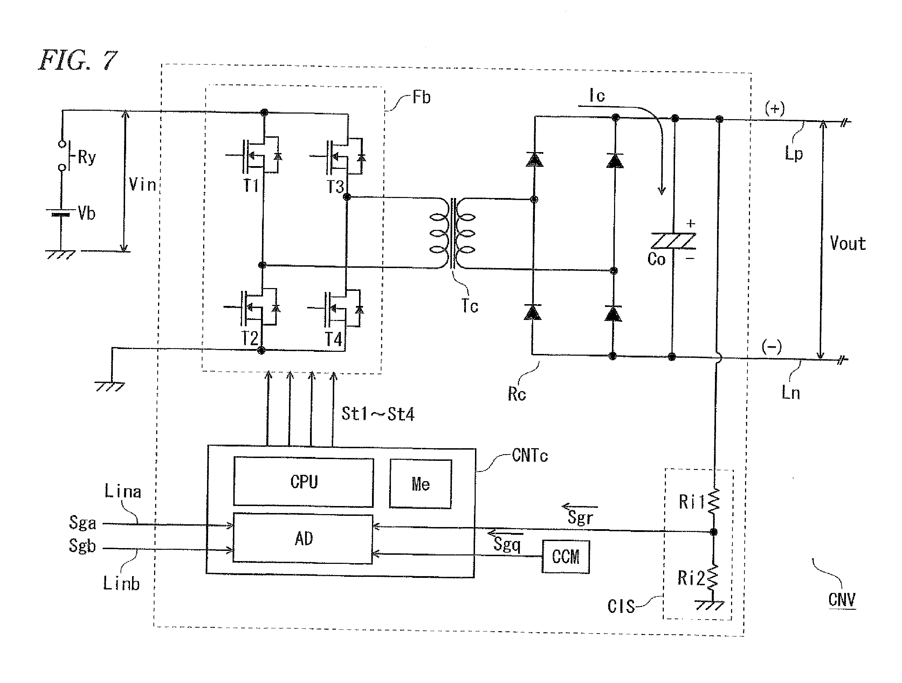

Referring to FIG. 7, a circuit configuration of a DC-DC converter CNV according to Embodiment 1 will be described. The DC-DC converter CNV illustrated in FIG. 7 includes: a full-bridge circuit Fb including bridge-connected power transistors T1 to T4; an isolation transformer Tc connected at a subsequent stage of the full-bridge circuit Fb; a rectifier circuit Rc including bridge-connected diodes; and a smoothing capacitor Co connected at a subsequent stage of the rectifier circuit Rc. Although FIG. 7 illustrates the DC-DC converter CNV to be adapted to the ignition system SYS of FIG. 4, the DC-DC converter CNV can also be adapted to the ignition system SYS of FIG. 3 or FIG. 5. In these cases, the signals Sina and Sinb or the signal Sin will be inputted to the DC-DC converter CNV instead of the signals Sga and Sgb, and the processings in the DC-DC converter CNV will be changed as necessary.

In the DC-DC converter CNV, an inputted battery voltage (12 V to 24 V) is converted into an AC voltage by the full-bridge circuit Fb, and is boosted by the isolation transformer Tc. Then, the boosted AC voltage is subjected to half-wave rectification by the rectifier circuit Rc, and a bias voltage Vout is generated by the smoothing capacitor Co. The bias voltage Vout is adjusted to become a constant voltage that is selected from a range of about 40 (V) to about 50 (V).

As illustrated in FIG. 7, the DC-DC converter CNV further includes a voltage detection circuit CIS, a forced driving circuit CCM and a converter control circuit (control circuit) CNTc. The voltage detection circuit CIS includes voltage dividing resistors Ri1 and Ri2. An input part of the voltage detection circuit CIS is connected to the anode side power line (LP), and an output part of the voltage detection circuit CIS is connected to the control circuit CNTc via a signal line. A small amount of an electric current is introduced into the voltage dividing resistors Ri1 and Ri2 from the power line Lp through the voltage detection circuit CIS, and a detection value proportional to the bias voltage Vout is outputted as a detection signal Sgr from a voltage dividing point.

The forced driving circuit CCM is connected to the control circuit CNTc via another signal line. The forced driving circuit CCM generates a forced driving signal Sgq, and outputs the forced driving signal Sgq to the control circuit CNTc. The forced driving signal Sgq has a pulse or rectangular waveforms, and includes a forced operation start edge Es and a forced operation end edge Ee. The forced operation start edge Es indicates voltage increase control start time of the DC-DC converter CNV, and the forced operation end edge Ee indicates voltage increase control end time thereof. The forced driving signal Sgq is outputted in accordance with the discharge request period, and the DC-DC converter CNV forcedly increases the bias voltage Vout during a period between the forced operation start edge Es and the forced operation end edge Ee.

The control circuit CNTc supplies control signals St1 to St4 to the power transistors T1 to T4, respectively, thereby controlling an output of the DC-DC converter CNV. A circuit configuration of the control circuit CNTc will be described below.

The control circuit CNTc includes an arithmetic circuit CPU, an A/D conversion circuit AD and a memory circuit Me as illustrated in FIG. 7. The control circuit CNTc also includes a clock circuit or the like. The A/D conversion circuit AD is fed the detection signal Sgr from the voltage detection circuit CIS, the signal Sgq from the forced driving circuit CCM, and the spark command signals (e.g., Sga and Sgb). The AID conversion circuit AD performs AID conversion on each of the fed signals, and the converted data is stored in the memory circuit Me as necessary.

The memory circuit Me stores various control programs. Further, in the memory circuit Me, the specified current values Ia1th and Ib1th are mapped for each operation condition of the internal combustion engine, and data for generating the control signals St1 to St4 for the power transistors T1 to T4 is mapped for each of various control modes described later.

Each control program includes: a program (switching specification program) for realizing one of two alternative control modes, i.e., a feedback mode and a forced voltage increase mode; and a program (control signal decision program) for deciding a control signal (control signals) associated with the selected control mode. In the feedback mode, voltage increase control or voltage reduction control is performed based on the detection value of the bias voltage Vout such that the bias voltage Vout converges on the set voltage. In this control mode, a threshold voltage is set at each of lower and upper limit values of the set voltage, so that voltage reduction control is started when the bias voltage Vout has reached the upper threshold voltage, and voltage increase control is started when the bias voltage Vout has reduced to the lower threshold voltage. On the other hand, in the forced voltage increase mode, voltage increase control is forcedly performed irrespective of the value of the bias voltage.

Map information for the feedback mode and map information for the forced voltage increase mode are prepared, and the control signals are generated based on the map information. The map information for the feedback mode includes data (signal generation data) for setting a duty ratio of the control signals St1 to St4 so as to perform both of voltage increase control and voltage reduction control in accordance with a difference between the bias voltage Vout and the set voltage.

The map information for the forced voltage increase mode includes data (signal generation data) for setting the duty ratio of the control signals St1 to St4 so as to forcedly increase the bias voltage Vout. Preferably, the map information for the forced voltage increase mode is set so that an ON duty ratio in the forced voltage increase mode is longer than that in the feedback mode so that the bias voltage Vout is quickly increased.

During the feedback mode, in the control circuit CNTc, a signal indicating the feedback mode and a signal indicating a difference between the bias voltage Vout and the set voltage are transmitted to the memory circuit Me; the map information for voltage increase control or voltage reduction control is selected from the memory circuit Me; and appropriate signal generation data is extracted from the memory circuit Me based on the selected map information and outputted to the arithmetic circuit CPU. Then, the arithmetic circuit CPU performs appropriate arithmetic processing to generate the control signals St1 to St4 associated with the detection value of the bias voltage Vout, and the generated control signals St1 to St4 are outputted from output ports of the control circuit CNTc.

During the forced voltage increase mode, in the control circuit CNTc, a signal indicating the forced voltage increase mode is transmitted to the memory circuit Me; the map information for the forced voltage increase mode is selected from the memory circuit Me; and the signal generation data associated with the forced voltage increase mode is outputted to the arithmetic circuit CPU. Then, the control signals St1 to St4 indicating the forced voltage increase mode are outputted from output ports of the control circuit CNTc.

Upon recognition of the forced operation start edge Es of the forced driving signal Sgq, the control circuit CNTc switches the control mode from the "feedback mode" to the "forced voltage increase mode" by the switching specification program. Contrary, upon recognition of the forced operation end edge Ee of the forced driving signal Sgq, the control circuit CNTc switches the control mode from the "forced voltage increase mode" to the "feedback mode". That is, the control circuit CNTc according to Embodiment 1 performs the switching specification program based on the forced driving signal Sgq.

As described above, the ignition system SYS according to Embodiment 1 has the forced voltage increase mode in which the DC-DC converter CNV forcedly increases the bias voltage Vout. By activating the forced voltage increase mode during the discharge request period, an output voltage reduction during the discharge request period can be suppressed. As a result, in the internal combustion engine ignition system SYS, the primary current surely reaches/exceeds a predetermined threshold value in the discharge request period, and a discharge operation at the spark plug can be reliably sustained.

A bias voltage restoration operation can be further accelerated by moving forward a start time of the forced voltage increase mode. Especially, by activating the forced voltage increase mode from an early stage of the discharge request period, the bias voltage restoration operation can be quickly performed. Thus, the DC-DC converter CNV can restore the voltage value of the bias voltage Vout to the set voltage before the bias voltage Vout is excessively reduced.

In the ignition system SYS, since a reduction of the bias voltage Vout is suppressed, an output reduction in each spark coil can be suppressed, and discharge in a plug gap can be continued for a given time period. Accordingly, a reliable spark operation is ensured for a given time period even in the internal combustion engine that requires high discharge energy. In other words, the above-described ignition system SYS can be suitably used for lean fuel combustion control or EGR combustion control.

### (Embodiment 2)

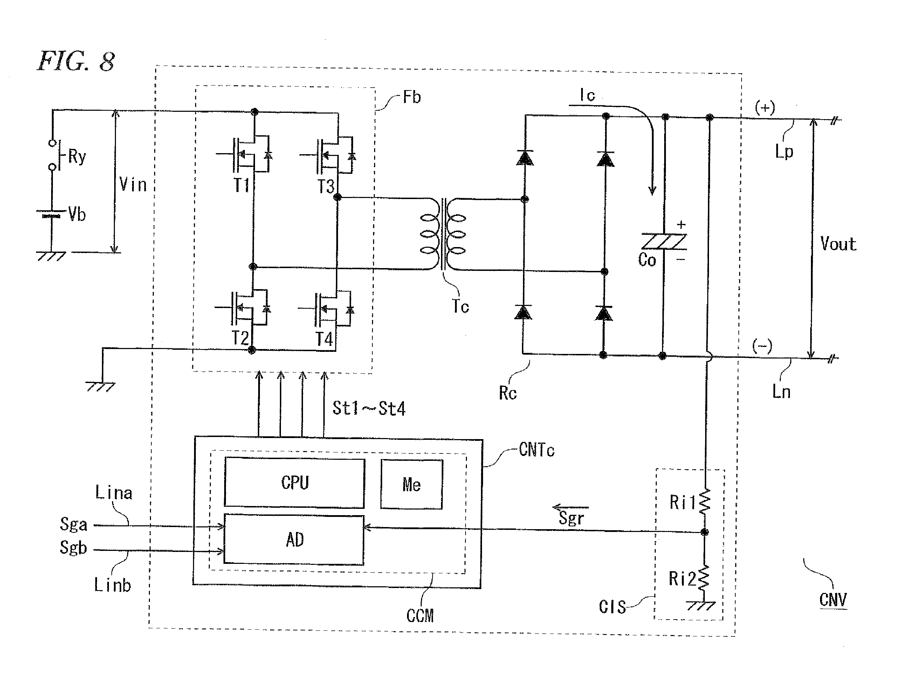

Referring to FIG. 8, a circuit configuration of a DC-DC converter CNV according to Embodiment 2 will be described. The same components as those described above are identified by the same reference characters, and the description thereof will be omitted.

As illustrated in FIG. 8, in the DC-DC converter CNV according to Embodiment 2, the forced driving circuit CCM is omitted. Instead of providing the forced driving circuit CCM, hardware (such as the arithmetic circuit CPU and the memory circuit Me) and/or control programs in the control circuit CNTc cooperates with each other, thereby implementing functions similar to those of the forced driving circuit CCM.

Specifically, similarly to Embodiment 1, a switching specification program and a control signal decision program are incorporated into the control program according to Embodiment 2. Further, the control circuit CNTc recognizes, from the inputted spark command signal (e.g., Sga and Sgb), the forced operation start time (i.e., the start time of the forced voltage increase mode) or forced operation end time (i.e., the end time of the forced voltage increase mode), and allows the switching specification program to function based on these recognized information. Thus, the control modes can be switched even when the forced driving circuit CCM is not provided as in Embodiment I .

In Embodiment 2, the switching specification program specifies the forced operation start time and the forced operation end time. For example, the switching specification program may determine both of the forced operation start time and the forced operation end time based on pulse edges of the spark command signal. Alternatively, the end time of the forced voltage increase mode may be set as a time point at which a given time period has elapsed since the start of the forced voltage increase mode.

The Embodiment 2 can archive effects similar to those of Embodiment 1. Specifically, the DC-DC converter CNV can flexibly switch between the forced voltage increase mode and the feedback mode, and can forcedly increase the bias voltage Vout with appropriate timing in the discharge request period. Thus, the bias voltage Vout can be quickly restored to the set voltage by switching the control mode to the forced voltage increase mode with appropriate timing.

### (Embodiment 3)

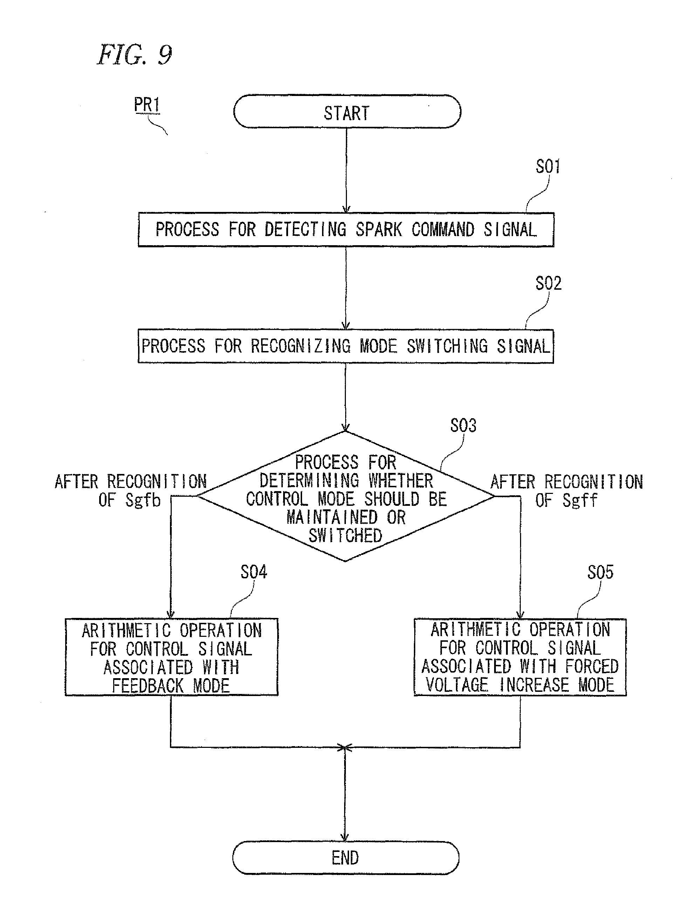

FIG. 9 illustrates the switching specification program and the control signal decision program according to Embodiment 3. As illustrated in FIG. 9, a control program PR1 includes: a spark command detection process S01 ; a mode switching point recognition process S02; a mode switching determination process S03; and control signal arithmetic processes S04 and S05. The spark command detection process S01, the mode switching point recognition process S02 and the mode switching determination process S03 constitute the switching specification program. On the other hand, the control signal arithmetic processes S04 and S05 constitute the control signal decision program.

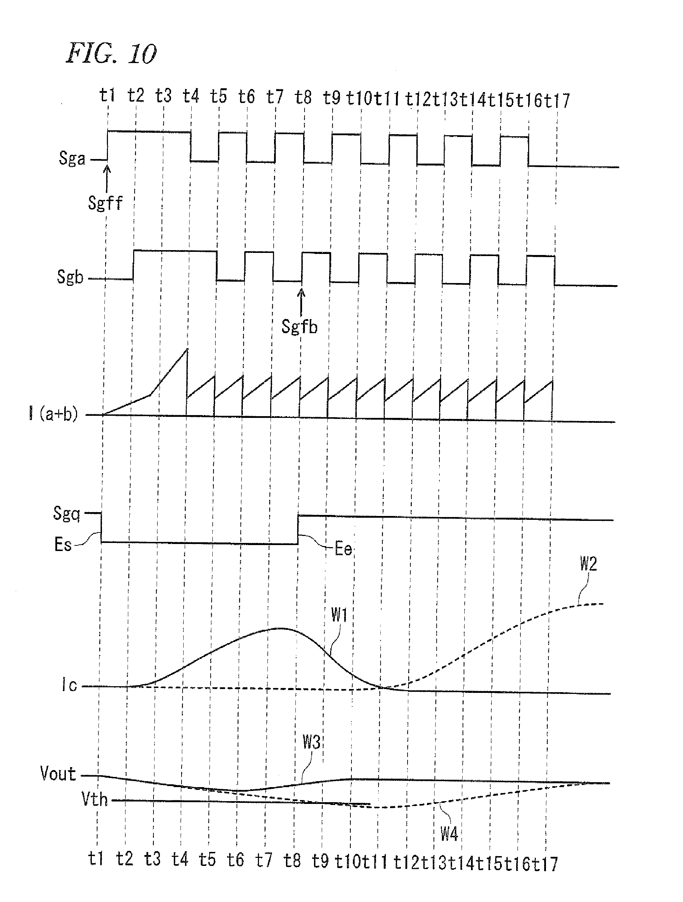

In Embodiment 3, the DC-DC converter CNV equipped with the forced driving circuit CCM, i.e., the DC-DC converter CNV illustrated in FIG. 7, is used. The forced driving signal Sgq is outputted from the forced driving circuit CCM based on the spark command signal. FIG. 10 illustrates the forced driving signal Sgq, the spark command signals Sga and Sgb, a synthesized primary current I (a + b), an electric current Ic flowing into the smoothing capacitor Co (which is represented by a solid line), and the bias voltage Vout of the DC-DC converter (which is represented by a solid line).

Referring again to FIG. 9, the control program PR1 will be described. First, upon startup of the program PR1, the spark command detection process S01 is performed. In the process S01, the spark command signals Sga and Sgb are detected for each AD timing (see Sga and Sgb in FIG. 10). Each of these spark command signals may be obtained by detecting a signal outputted from the engine control unit ECU, or may be obtained by detecting a signal inputted to the power transistor Ta or Tb.

The forced driving circuit CCM outputs the forced driving signal Sgq (see Sgq in FIG. 10). In Embodiment 3, the forced driving signal Sgq has the falling edge (forced operation start edge) Es corresponding to a first edge Sgff of the spark command signal Sga, and the rising edge (forced operation end edge) Ee corresponding to a fifth edge Sgfb of the spark command signal Sgb.

In the mode switching point recognition process S02, the falling edge Es or rising edge Ee of the forced driving signal Sgq is detected. When the falling edge Es has not come yet, a signal indicating the feedback mode is outputted to the memory circuit Me in the mode switching determination process S03, and the DC-DC converter CNV is operated in the feedback mode (at a stage preceding t1 in FIG. 10). When the falling edge Es has come, a signal indicating the forced voltage increase mode is outputted to the memory circuit Me in the mode switching determination process S03, and the DC-DC converter CNV is operated in the forced voltage increase mode (t1 to t8 in FIG. 10). Thereafter, when the rising edge Ee has come, a signal indicating the feedback mode is outputted to the memory circuit Me in the mode switching determination process S03, and the feedback mode is restarted (t8 to t17 in FIG. 10).

When the control signal arithmetic process S04 is selected, an arithmetic process for generating a control signal associated with the feedback mode is performed. When the control signal arithmetic process S05 is selected, an arithmetic process for generating a control signal associated with the forced voltage increase mode is performed.

FIG. 10 further illustrates a state of the electric current Ic flowing into the smoothing capacitor Co and a state of the bias voltage Vout of the DC-DC converter. A solid line W1 of the electric current Ic indicates a current value when the forced voltage increase mode is activated (i.e., in the case of Embodiment 3), and a broken line W2 of the electric current Ic indicates a current value when the forced voltage increase mode is not activated (i.e., in the case of the comparison example). Furthermore, a solid line W3 of the bias voltage Vout indicates a current value when the forced voltage increase mode is activated (i.e., in the case of Embodiment 3), and a broken line W4 of the bias voltage Vout indicates a current value when the forced voltage increase mode is not activated (i.e., in the case of the comparison example). A lower threshold voltage Vth is defined in the feedback mode such that, when the bias voltage Vout falls below the lower threshold voltage Vth, voltage increase control starts in the DC-DC converter CNV

First, when the forced voltage increase mode is not activated, the electric current Ic starts to flow into the smoothing capacitor Co at a later stage of the spark command signals Sga and Sgb (see W2). This is because the DC-DC converter CNV does not perform voltage increase control until the bias voltage Vout falls below the lower threshold voltage Vth in the feedback control (see W4). For example, when the lower threshold voltage Vth is set at a lower level, the bias voltage Vout further excessively reduces.

Contrary, when the forced voltage increase mode is activated, the electric current Ic flows into the smoothing capacitor Co at an early time (see W1). This is because the control mode is switched to the forced voltage increase mode at an early stage of the spark command signals Sga and Sgb and thus the DC-DC converter CNV starts voltage increase control without waiting for the reduction of the bias voltage Vout to the lower threshold voltage Vth (see W3).

In other words, the DC-DC converter CNV activates the forced voltage increase mode before voltage increase control in the feedback mode is started, thereby effectively suppressing a reduction in the bias voltage Vout.

In Embodiment 3, the forced voltage increase mode is activated in synchronization with the initial edge Sgff of the spark command signal Sga. Thus, upon input of the spark command signal Sga, the DC-DC converter CNV immediately increases the bias voltage Vout, thereby more effectively suppressing a reduction in the bias voltage Vout.

In Embodiment 3, when the primary current I (a + b) is interrupted for the first time, the forced voltage increase mode has already been activated. Thus, the bias voltage Vout can be adjusted into the set voltage at the discharge start time. Generally, discharge energy sufficient to cause a breakdown is required from the discharge start time. In Embodiment 3, the bias voltage Vout is restored from the discharge start time; thus, a discharge operation is reliably performed from an early stage of the discharge request period, and the time duration of the discharge operation is ensured so as to meet design requirements.

### (Embodiment 4)

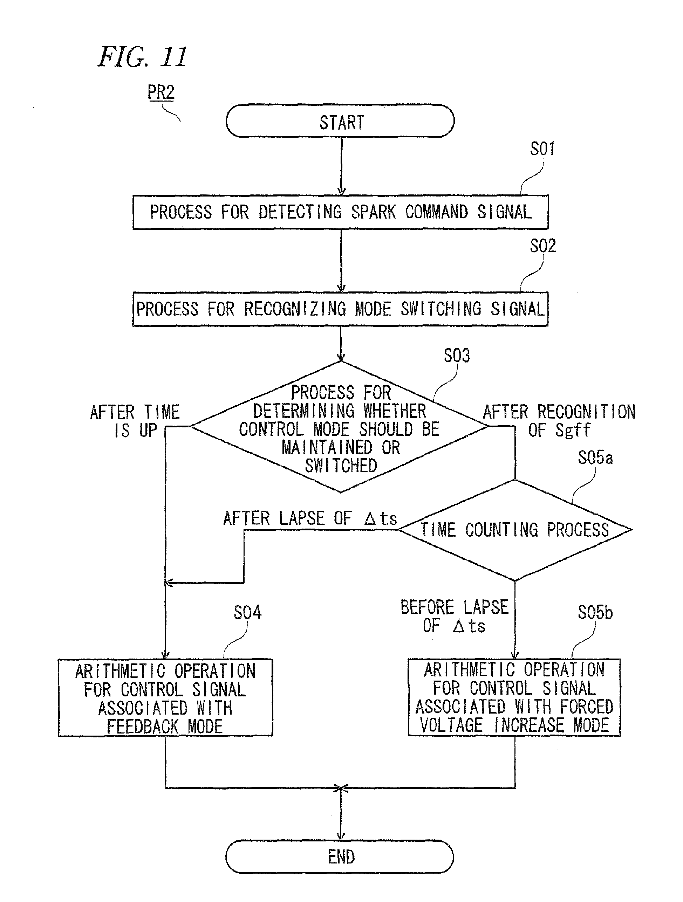

FIG. 11 illustrates a control program PR2 according to Embodiment 4. The control program PR2 is a variation of the control program PR1 according to Embodiment 3, and is additionally provided with a time counting process S05a as the switching specification program.

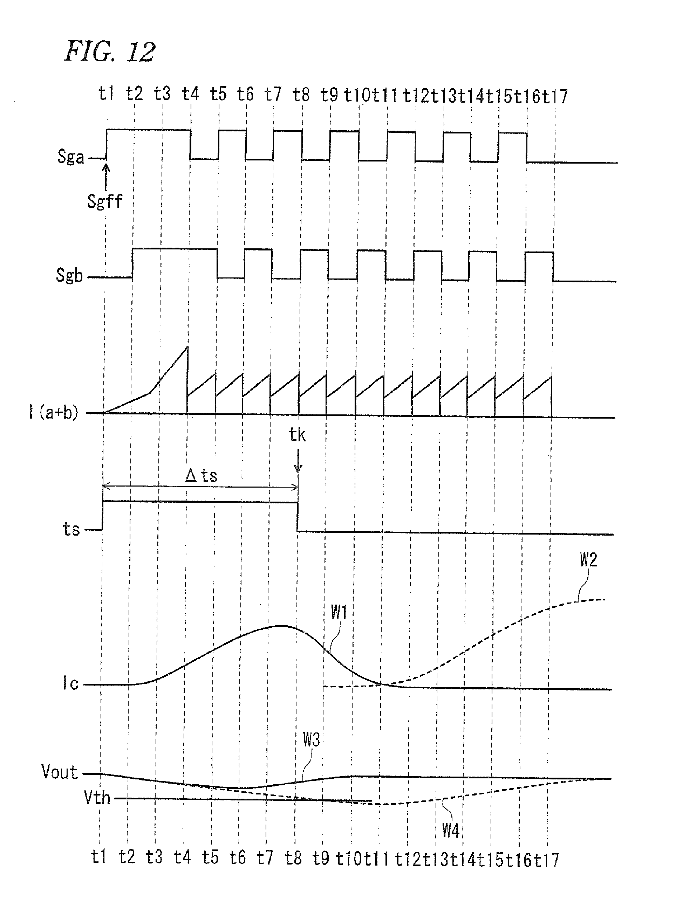

In Embodiment 4, the DC-DC converter CNV illustrated in FIG. 8 is used. FIG. 12 illustrates a time interval Δts adjusted by the process S05a, the spark command signals Sga and Sgb, the synthesized primary current I (a + b), the electric current Ic flowing into the smoothing capacitor Co (which is represented by a solid line), and the bias voltage Vout of the DC-DC converter (which is represented by a solid line).

Referring again to FIG. 11, the control program PR2 will be described. First, upon startup of the program PR2, the spark command detection process S01 and the mode switching point recognition process S02 are sequentially performed.

In the mode switching point recognition process S02, the first edge Sgff of the spark command signal Sga is recognized. When the first edge Sgff of the spark command signal Sga is not recognized, the process S04 is performed, and the DC-DC converter is driven in the feedback mode (at the time preceding t1).

Upon recognition of the first edge Sgff in the process S02, the time counting process S05a is performed. In the time counting process S05a, the counting up to the preset time interval. Δts is started by taking the first edge Sgff as a starting point. In the process S05a, the forced voltage increase mode is selected until a lapse of the time interval Δts since the starting point Sgff (t1 to t8). Upon lapse of the time interval Δts, the control mode goes back to the feedback mode (t8 to t17). That is, in Embodiment 4, an end point tk of the time interval Δts is determined as the end time of the forced voltage increase mode.

The time interval Δts may be specified by an arithmetic unit such as a microprocessor. Alternatively, the time counting process may be realized by adding a time counting function to the forced driving circuit CCM illustrated in FIG. 7.

### (Embodiment 5)

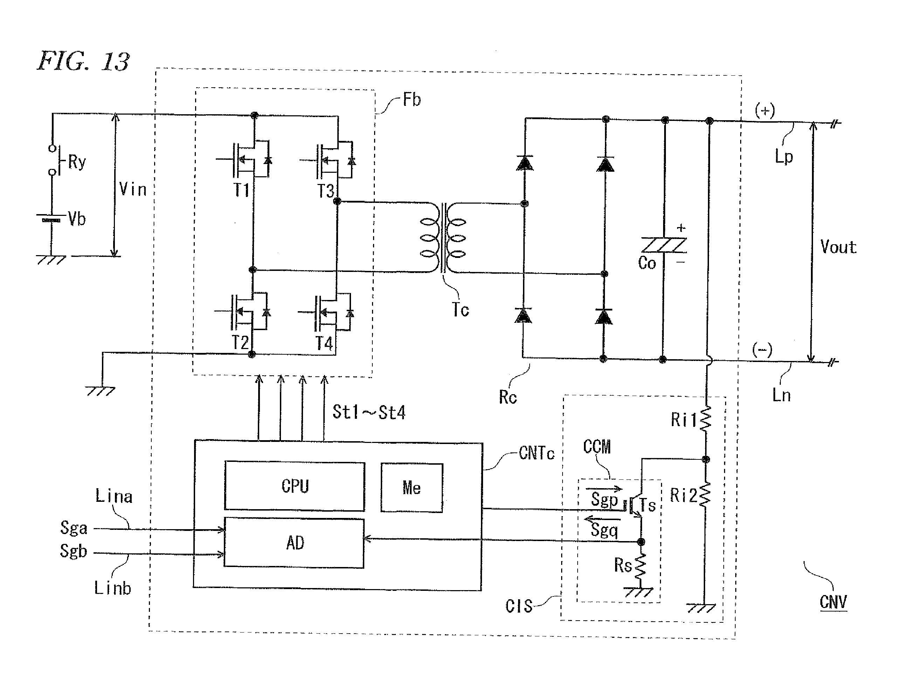

FIG. 13 illustrates an example configuration of the forced driving circuit CCM according to Embodiment 5. As illustrated in FIG. 13, the forced driving circuit CCM includes a transistor Ts and a resistor Rs. A base of the transistor Ts is connected with a signal line for supplying a signal Sgp to the control circuit CNTc. A collector of the transistor Ts is connected with a detection point of the voltage dividing resistors Ri1 and Ri2. And, an emitter of the transistor Ts is connected to the ground via the resistor Rs. The voltage at the emitter of the transistor Ts is inputted to the control circuit CNTc as the forced driving signal Sgq.

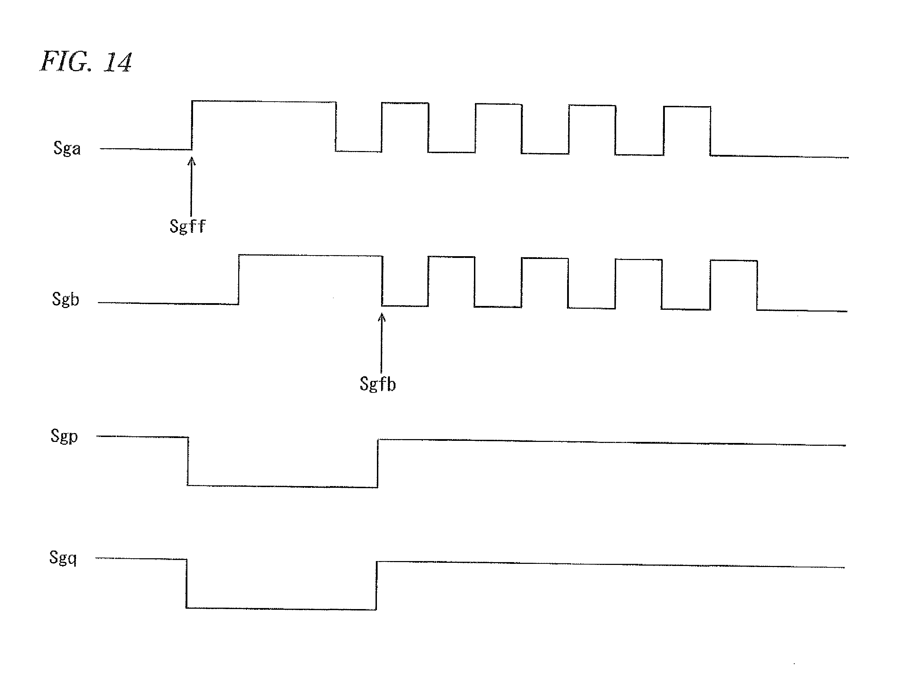

As illustrated in FIG. 14, the signal Sgp to be inputted to the base of the transistor Ts is generated as a rectangular wave from the first edge Sgff of the spark command signal Sga to the second edge Sgfb of the spark command signal Sgb. The voltage at the emitter of the transistor Ts is increased when an electric current passes therethrough. Thus, the forced driving signal Sgq also becomes a rectangular wave similar to the signal Sgp.

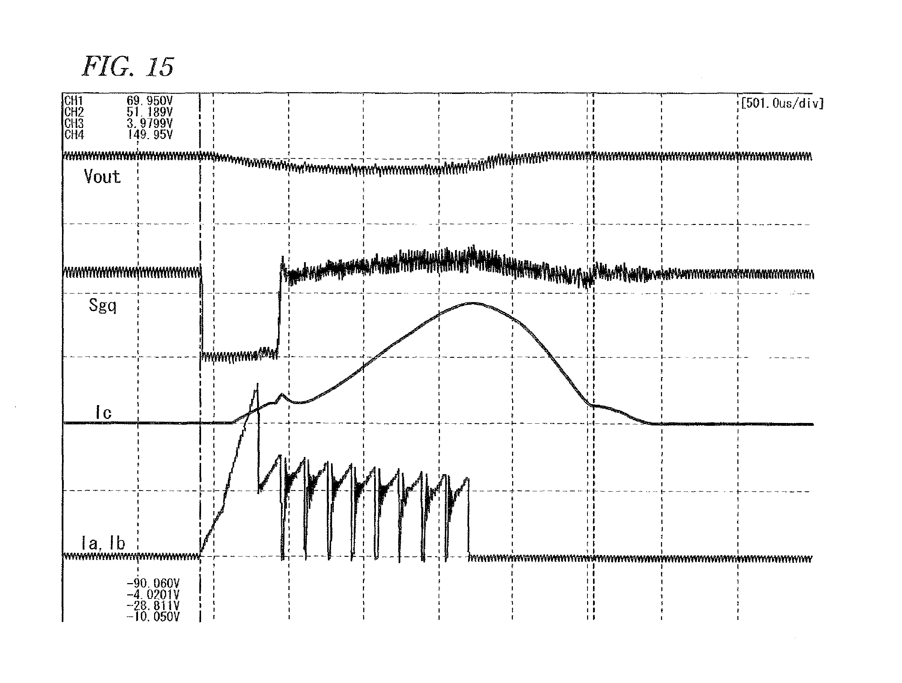

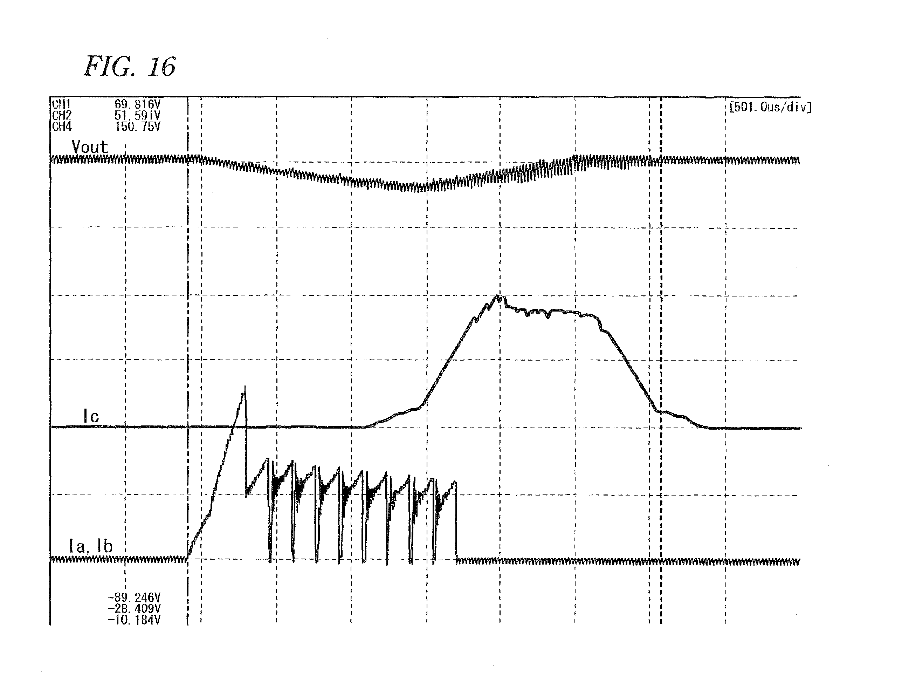

FIG. 15 is a graph illustrating measured waveforms in a case where the forced voltage increase mode is activated. And, FIG. 16 is a graph illustrating measured waveforms in a case where the forced voltage increase mode is not activated, as a comparison example. All the waveforms in both of FIGS. 15 and 16 are measured under the same conditions except that the forced voltage increase mode is activated in FIG. 15, but is not activated in FIG. 16. The foregoing data is provided in the following order from above: the bias voltage Vout of the DC-DC converter; the forced driving signal Sgq (illustrated only in FIG. 15); the electric current Ic flowing into the smoothing capacitor Co; and the synthesized waveform of primary currents Ia and Ib.

In FIG. 16 (comparison example), the electric current Ic flowing into the smoothing capacitor Co starts to appear at a later stage of the primary currents Ia and Ib. Specifically, in FIG. 16, supplying of electric charges into the smoothing capacitor Co is delayed until the bias voltage Vout is reduced to reach the lower threshold voltage Vth. Thus, restoration of the bias voltage Vout starts at a later stage of (or, after) the discharge request period. As a result, the value of the primary current is reduced as a whole, and therefore, a "discharge interruption" may occur at the spark plug PG in the discharge request period.

On the other hand, in FIG. 15 (Embodiment 5), the electric current Ic starts to flow into the smoothing capacitor Co substantially simultaneously with the generation of the primary current. Since a small peak value appears in the electric current Ic in association with the forced driving signal Sgq, it can be considered that the forced voltage increase mode actually functions to suppress a reduction in the bias voltage Vout. Moreover, the forced voltage increase mode is activated from an early stage of the discharge request period, and the value of the bias voltage Vout is improved over the entire range of the discharge request period.

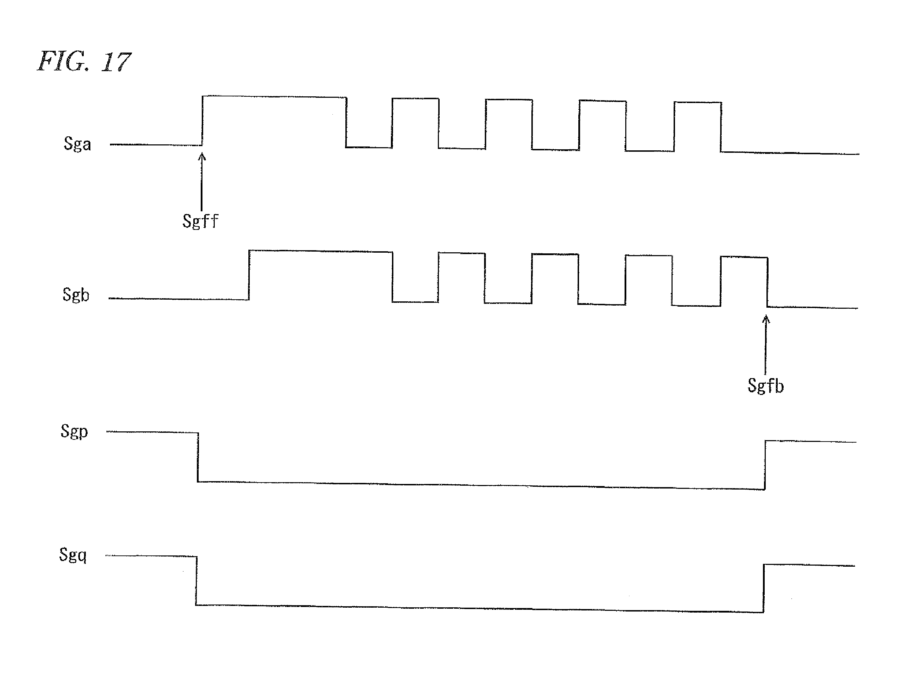

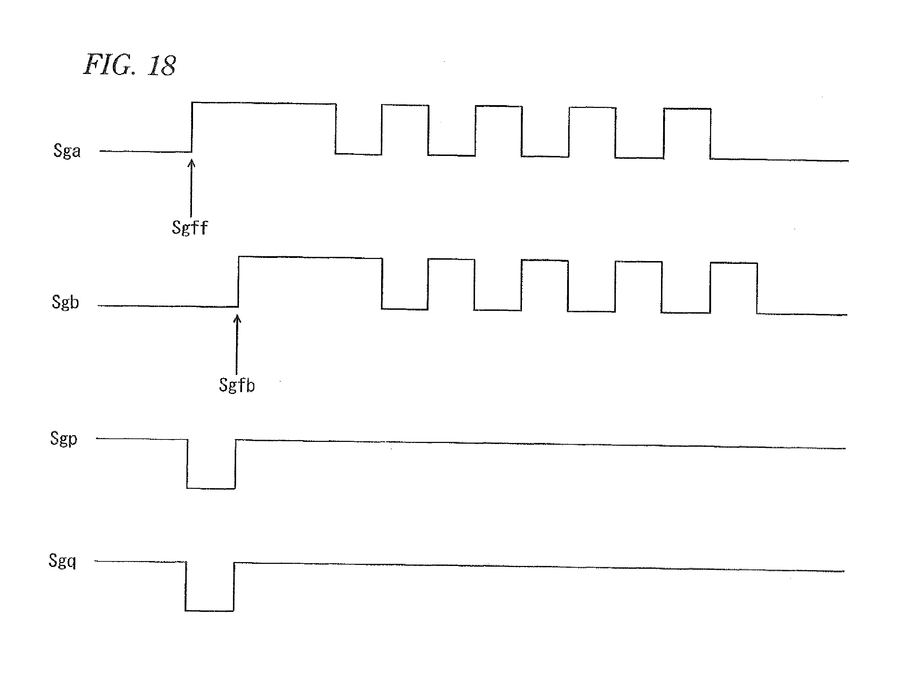

In Embodiment 5, as illustrated in FIG. 14, the start time of the forced driving signal Sgq is provided in association with the initial edge Sgff of the spark command signal Sga. Thus, advantageously, initial discharge can be reliably performed. In an ignition system in which the amount of discharged electric charges from the smoothing capacitor Co is significantly large, the end time of the forced voltage increase mode may be provided at a later stage of the discharge request period as illustrated in FIG. 17, thereby sufficiently supplying electric charges to the smoothing capacitor Co. When the smoothing capacitor Co has a relatively large capacity, minimal measures may be taken such that the end time of the forced voltage increase mode coincides with the timing of initial discharge as illustrated in FIG. 18, thereby effectively preventing a reduction in the bias voltage at the time of the initial discharge.

Although the ignition system using the DCO method has been exemplified above, the present invention is applicable not only to such ignition system but also to a system in which a spark operation is performed by a multipulses. For example, also in an ignition system using a multi-ignition method, a reduction in the voltage applied to a primary coil is suppressed to thereby restore a primary current to a desired value every time an edge of a multipulse comes. As a result, continuous discharge at a spark plug cab be reliably realized for a given time period. Moreover, also in an ignition system using an AC ignition method, a primary current restoration operation is guaranteed, and therefore, continuous discharge at a spark plug can be reliably realized for a given time period.

## Claims

1. An internal combustion engine ignition system, comprising:
a spark coil having primary and secondary coils, the spark coil being configured to apply a high voltage to a spark plug from the secondary coil;
a power transistor configured to perform an intermittent control own a current flowing through the primary current for a given time period, based on an inputted multipulse;
a DC-DC converter electrically connected to the primary coil and configured to control a bias voltage applied to the primary coil; and
a converter control circuit configured to control the DC-DC converter while switching a control mode to either
a feedback mode in which the bias voltage is increased or decreased based on a detection value of the bias voltage, or
a forced voltage increase mode in which the bias voltage is forcedly increased.

2. The system of Claim 1,
wherein the converter control circuit detects a spark command signal applied to drive the power transistor, and switches the control mode based on a waveforms of the spark command signal.

3. The system of Claim 1,
wherein the control mode is switched to the forced voltage increase mode during a discharge request period.

4. The system of Claim 3,
wherein the control mode is switched to the forced voltage increase mode before voltage increase control in the feedback mode is started.

5. The system of Claim 1,
wherein the control mode is switched to the forced voltage increase mode substantially simultaneously with an initial edge of the multipulse.
